# EUROPEAN PATENT APPLICATION

(11) **EP 2 852 227 A1**
(43) Date of publication of application: **25.03.2015**
(21) Application number: 12890864.7
(22) Date of filing: 24.12.2012
(51) Int. Cl.: H04W 52/02

(54) **METHOD AND APPARATUS FOR CONTROLLING WIRELESS FIDELITY DEVICE IN TERMINAL, AND TERMINAL**

(71) Applicant: Huawei Device Co., Ltd., Longgang District Shenzhen Guangdong 518129 (CN)
(72) Inventor: ZHANG, Jianchun, Shenzhen Guangdong 518129 (CN); ZHAO, Jing, Shenzhen Guangdong 518129 (CN)
(74) Representative: Lord, Michael
(86) International application number: PCT/CN2012/087310
(87) International publication number: WO 2014/100943

(57) **Abstract**

The present invention discloses a control method for a wireless fidelity device in a terminal, including: acquiring, in a moving process of the terminal, first location information at a first moment, second location information at a second moment, and coverage of each of wifi access points corresponding to each of all wifi access point identifiers stored in the terminal; and triggering turning-off or turning-on of the wifi device according to that a location corresponding to the first location information and a location corresponding to the second location information are outside or within the coverage of each of the wifi access points corresponding to each of all the wifi access point identifiers stored in the terminal. In embodiments of the present invention, turning-off or turning-on of a wifi device in a terminal can be triggered according to location information of the terminal, so that power of the terminal is saved, and furthermore, the wifi device does not need to be turned on manually by a user.

## Description

### TECHNICAL FIELD

The present invention relates to the field of communications technologies, and in particular, to a control method and apparatus for a wireless fidelity (wireless fidelity, wifi) device, and a terminal.

### BACKGROUND

When a terminal does not use a wifi function, a wifi device for starting **a** wifi connection in the terminal is in a standby state, and therefore certain power is still consumed. For example, test data in a certain mobile phone indicates that if no wifi access point identifier has been stored, a current is about 5 milliamps when the screen of the mobile phone is turned off, while if a wifi access point identifier has been stored, a current is about 10 milliamps when the screen of the mobile phone is turned off.

If a wifi device in a terminal is turned off immediately after the terminal is disconnected from a wifi access point, when re-entering an area covered by the wifi access point, the wifi device cannot be automatically connected to the wifi access point.

The inventor of the present invention finds that, a common problem for a wifi device is that, after leaving an area covered by a wifi access point, the wifi device enters a standby state, thereby causing an additional current consumption of 5-10mA, and if the wifi device is turned off, when re-entering the area covered by the wifi access point, the wifi device cannot be automatically turned on.

### SUMMARY

Embodiments of the present invention provide a control method for a wifi device in a terminal, which can trigger turning-off or turning-on of the wifi device in the terminal according to location information of the terminal, so that power of the terminal is saved, and furthermore, the wifi device does not need to be turned on manually by a user.

In a first aspect, the present invention provides a control method for a wireless fidelity wifi device in a terminal, including:
acquiring first location information of the terminal at a first moment, second location information of the terminal at a second moment, and coverage of each of wifi access points corresponding to each of all wifi access point identifiers stored in the terminal, where the first moment is earlier than the second moment;
triggering turning-off of the wifi device when it is determined that the terminal is located within coverage of at least one wifi access point among the wifi access points at the first moment, and is located outside the coverage of each of the wifi access points corresponding to each of all the wifi access point identifiers at the second moment; and
triggering turning-on of the wifi device when it is determined that the terminal is located outside the coverage of each of the wifi access points corresponding to each of all the wifi access point identifiers at the first moment, and is located within coverage of at least one wifi access point among the wifi access points at the second moment.

With reference to the first aspect, in a first possible implementation manner, the step of triggering turning-off of the wifi device when it is determined that the terminal is located within coverage of at least one wifi access point among the wifi access points at the first moment, and is located outside the coverage of each of the wifi access points corresponding to each of all the wifi access point identifiers at the second moment specifically includes:
determining a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
triggering the turning-off of the wifi device when the location corresponding to the first location information is within the coverage of the at least one wifi access point among the wifi access points, and the location corresponding to the second location information is outside the coverage of each of the wifi access points corresponding to each of all the wifi access point identifiers.

With reference to the first aspect, in a second possible implementation manner, the step of triggering turning-on of the wifi device when it is determined that the terminal is located outside the coverage of each of the wifi access points corresponding to each of all the wifi access point identifiers at the first moment, and is located within coverage of at least one wifi access point among the wifi access points at the second moment specifically includes:
determining a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
triggering the turning-on of the wifi device when the location corresponding to the first location information is outside the coverage of each of the wifi access points corresponding to each of all the wifi access point identifiers, and the location corresponding to the second location information is within the coverage of the at least one wifi access point among the wifi access points.

With reference to the first aspect and the first or the second possible implementation manner of the first aspect, in a third possible implementation manner, the control method further includes:
acquiring a trigger instruction for connecting to a new wifi access point, where the trigger instruction carries an identifier of the new wifi access point; and
acquiring and associatively storing the identifier of the new wifi access point and coverage of the new wifi access point.

With reference to the first aspect and the first to the third possible implementation manners of the first aspect, in a fourth possible implementation manner, after the step of turning on the wifi device, the control method further includes:
sending a first search instruction to the wifi device, so that the wifi device searches for each of the wifi access points corresponding to each of all the wifi access point identifiers stored in the terminal, and the wifi device establishes a connection to one of found wifi access points.

With reference to the first aspect and the first to the third possible implementation manners of the first aspect, in a fifth possible implementation manner, after the step of turning on the wifi device, the control method further includes:
sending a second search instruction to the wifi device, so that the wifi device searches for each of the wifi access points corresponding to each of all the wifi access point identifiers stored in the terminal;
receiving identifiers of found wifi access points sent by the wifi device;
determining an identifier of a wifi access point to which a connection is established for the most times among the identifiers of the found wifi access points; and
sending, to the wifi device, the identifier of the wifi access point to which the connection is established for the most times, so that the wifi device establishes a connection to the wifi access point corresponding to the identifier of the wifi access point to which the connection is established for the most times.

In a second aspect, the present invention provides a control apparatus, including:
an acquiring unit, configured to acquire first location information of the terminal at a first moment, second location information of the terminal at a second moment, and coverage of each of wifi access points corresponding to each of all wifi access point identifiers stored in the terminal, where the first moment is earlier than the second moment;
a first control unit, configured to trigger turning-off of the wifi device when it is determined that the terminal is located within coverage, which is acquired by the acquiring unit, of at least one wifi access point among the wifi access points at the first moment, and is located outside the coverage of each of the wifi access points corresponding to each of all the wifi access point identifiers at the second moment; and
a second control unit, configured to trigger turning-on of the wifi device when it is determined that the terminal is located outside the coverage, which is acquired by the acquiring unit, of each of the wifi access points corresponding to each of all the wifi access point identifiers at the first moment, and is located within coverage of at least one wifi access point among the wifi access points at the second moment.

With reference to the second aspect, in a first possible implementation manner, the first control unit includes: a first determining subunit and a first control subunit, where
the first determining subunit is configured to determine a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
the first control subunit is configured to trigger the turning-off of the wifi device when the first determining subunit determines that the location corresponding to the first location information is within the coverage of the at least one wifi access point among the wifi access points, and the location corresponding to the second location information is outside the coverage of each of the wifi access points corresponding to each of all the wifi access point identifiers.

With reference to the second aspect, in a second possible implementation manner, the second control unit includes: a second determining subunit and a second control subunit, where
the second determining subunit is configured to determine a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
the second control subunit is configured to trigger the turning-on of the wifi device when the second determining subunit determines that the location corresponding to the first location information is outside the coverage of each of the wifi access points corresponding to each of all the wifi access point identifiers, and the location corresponding to the second location information is within the coverage of the at least one wifi access point among the wifi access points.

With reference to the second aspect and the first or the second possible implementation manner of the second aspect, in a third possible implementation manner, the control apparatus further includes an associative storage unit, where
the acquiring unit is further configured to acquire a trigger instruction for connecting to a new wifi access point, where the trigger instruction carries an identifier of the new wifi access point, and acquire the identifier of the new wifi access point and coverage of the new wifi access point; and
the associative storage unit is configured to associatively store the identifier of the new wifi access point and the coverage of the new wifi access point that are acquired by the acquiring unit.

With reference to the second aspect and the first to the third possible implementation manners of the second aspect, in a fourth possible implementation manner,
the control apparatus further includes a first sending unit, where
the first sending unit is configured to send a first search instruction to the wifi device after the second control unit triggers the turning-on of the wifi device, so that the wifi device searches for each of the wifi access points corresponding to each of all the wifi access point identifiers stored in the terminal, and the wifi device establishes a connection to one of found wifi access points.

With reference to the second aspect and the first to the third possible implementation manners of the second aspect, in a fifth possible implementation manner,
the second sending unit is configured to send a second search instruction to the wifi device, so that the wifi device searches for each of the wifi access points corresponding to each of all the wifi access point identifiers stored in the terminal;
the receiving unit is configured to receive identifiers of found wifi access points sent by the wifi device;
the determining unit is configured to determine an identifier of a wifi access point to which a connection is established for the most times among the identifiers of the found wifi access points received by the receiving unit; and
the second sending unit is configured to send, to the wifi device, the identifier, which is determined by the determining unit, of the wifi access point to which the connection is established for the most times, so that the wifi device establishes a connection to the wifi access point corresponding to the identifier of the wifi access point to which the connection is established for the most times.

In a third aspect, the present invention provides a terminal, including: a control apparatus and a wifi device, where the control apparatus controls the wifi device; and
the control apparatus is the control apparatus described in the foregoing technical solutions.

In the embodiments of the present invention, first location information of the terminal at a first moment, second location information of the terminal at a second moment, and coverage of each of wifi access points corresponding to each of all wifi access point identifiers stored in the terminal are acquired, where the first moment is earlier than the second moment; turning-off of the wifi device is triggered when it is determined that the terminal is located within coverage of at least one wifi access point among the wifi access points at the first moment, and is located outside the coverage of each of the wifi access points corresponding to each of all the wifi access point identifiers at the second moment; and turning-on of the wifi device is triggered when it is determined that the terminal is located outside the coverage of each of the wifi access points corresponding to each of all the wifi access point identifiers at the first moment, and is located within coverage of at least one wifi access point among the wifi access points at the second moment. Compared with the prior art in which a wifi device in a standby state wastes power, and after the wifi device is turned off, the wifi device cannot be automatically turned on, with the control method for a wifi device in a terminal provided in the embodiments of the present invention, turning-off or turning-on of the wifi device in the terminal can be triggered according to a location of the terminal in a moving process, so that power of the terminal is saved, and furthermore, the wifi device does not need to be turned on manually by a user.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of an embodiment of a control method according to the embodiments of the present invention;
FIG. 2 is a schematic diagram of an embodiment of an application scenario according to the embodiments of the present invention;
FIG. 3 is a schematic diagram of an embodiment of a control apparatus according to the embodiments of the present invention;
FIG. 4 is a schematic diagram of another embodiment of the control apparatus according to the embodiments of the present invention;
FIG. 5 is a schematic diagram of another embodiment of the control apparatus according to the embodiments of the present invention;
FIG. 6 is a schematic diagram of another embodiment of the control apparatus according to the embodiments of the present invention;
FIG. 7 is a schematic diagram of another embodiment of the control apparatus according to the embodiments of the present invention;
FIG. 8 is a schematic diagram of another embodiment of the control apparatus according to the embodiments of the present invention;
FIG. 9 is a schematic diagram of an embodiment of a terminal according to the embodiments of the present invention;
FIG. 10 is a schematic diagram of another embodiment of the terminal according to the embodiments of the present invention;
FIG. 11 is a schematic diagram of another embodiment of the terminal according to the embodiments of the present invention; and
FIG. 12 is a schematic diagram of another embodiment of the terminal according to the embodiments of the present invention.

### DESCRIPTION OF EMBODIMENTS

Embodiments of the present invention provide a control method for a wifi device in a terminal, which can trigger turning-off or turning-on of the wifi device in the terminal according to location information of the terminal, so that power of the terminal is saved, and furthermore, the wifi device does not need to be turned on manually by a user. The embodiments of the present invention further provide a corresponding apparatus and terminal, which are described separately in detail in the following.

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

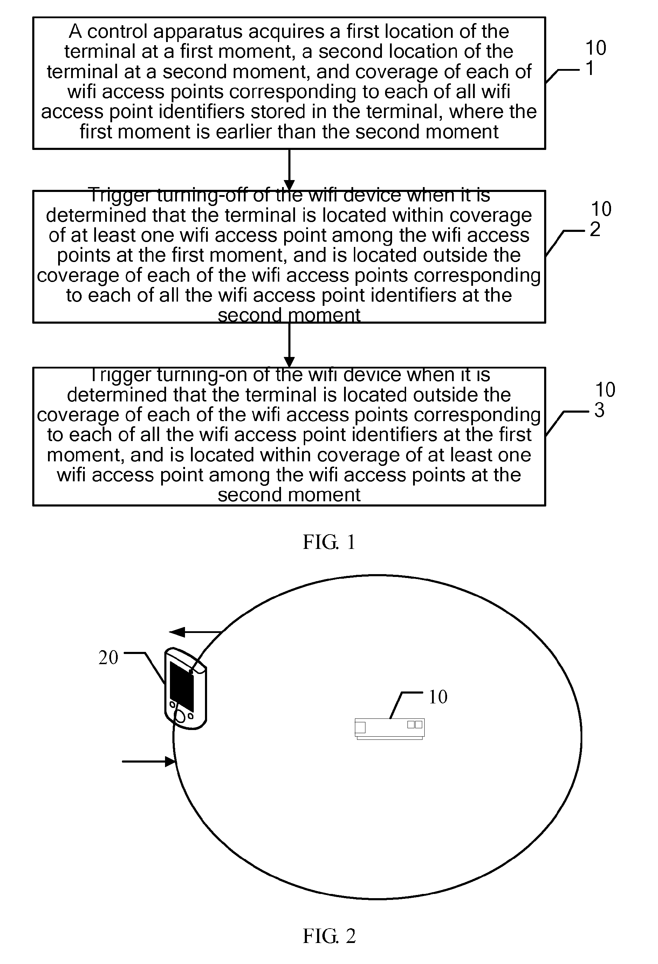

Referring to FIG. 1, an embodiment of a control method for a wireless fidelity (wireless fidelity, wifi) device in a terminal provided in the embodiments of the present invention includes:
101: Acquire a first location of the terminal at a first moment, a second location of the terminal at a second moment, and coverage of each of wifi access points corresponding to each of all wifi access point identifiers stored in the terminal, where the first moment is earlier than the second moment.

For wireless fidelity (wireless fidelity, wifi), a network is connected through a radio wave, generally a wireless router is used, and a network can always be connected in a wifi connection manner within an effective area covered by a radio wave of the wireless router.

The wifi device is a wifi module in the terminal, where the wifi module establishes a connection to a wifi access point.

The wifi access point may be a terminal device such as a wireless router, and a computer or a mobile phone with a wifi function.

The terminal in the embodiment of the present invention may be a device such as a mobile phone, a personal digital assistant (personal digital assistant, PDA), and a notebook computer.

After establishing a connection to a wifi access point for the first time, the terminal stores an identifier of the wifi access point, such as an identifier of a wireless router.

Each wifi access point has coverage. Definitely, coverage of wifi access points corresponding to wifi access point identifiers stored in the terminal may all overlap, or partially overlap, or not overlap at all.

In a moving process, the terminal may move out of coverage of a wifi access point from the coverage of the wifi access point. If the terminal moves out of the coverage of the wifi access point, a wifi connection is disconnected, and if the wifi is still in an on-state, power is consumed.

In the moving process of the terminal, location information of the terminal may be acquired continuously, where location information of a location where the terminal is located may be an identifier of a serving cell where the terminal is located, and preferably, is location information of accurate longitude and latitude obtained through positioning of a global positioning system (Global Positioning System, GPS).

Each wifi access point has a unique identifier, and coverage of a wifi access point may be set before the wifi access point leaves the factory, for example, an identifier of a wireless router corresponds to coverage of the wireless router.

102: Trigger turning-off of the wifi device when it is determined that the terminal is located within coverage of at least one wifi access point among the wifi access points at the first moment, and is located outside the coverage of each of the wifi access points corresponding to each of all the wifi access point identifiers at the second moment.

In the embodiment of the present invention, the determining whether the terminal is located within the coverage of each of the wifi access points corresponding to each of all the wifi access point identifiers at the first moment and whether the terminal is located within the coverage of each of the wifi access points corresponding to each of all the wifi access point identifiers at the second moment may be determining whether a location of the terminal at the first moment and a location of the terminal at the second moment are within or outside the coverage of each of the wifi access points corresponding to each of all the wifi access point identifiers.

For example, it is assumed that the terminal stores 5 wifi access point identifiers, which are wifi1, wifi2, wifi3, wifi4, and wifi5, and coverage of a wifi access point corresponding to each of the wifi access point identifiers has been determined. It is assumed that coverage of a wifi access point corresponding to wifi1 and coverage of a wifi access point corresponding to wifi2 partially overlap, and coverage of a wifi access point corresponding to each of wifi3, wifi4, and wifi5 does not overlap with coverage of the other 4 wifi access points, and when the terminal begins to move in the coverage of the wifi access point corresponding to wifi1, first location information at a first moment and second location information at a second moment are acquired. It is assumed that a location corresponding to the first location information is within the coverage of the wifi access point corresponding to wifi1, and if a location corresponding to the second location information is within the coverage of the wifi access point corresponding to wifi2, a handover between the wifi access points occurs; and if the location corresponding to the second location information is not within the coverage of the wifi access points corresponding to wifi1, wifi2, wifi3, wifi4, and wifi5, the turning-off of the wifi device can be triggered, so as to reduce power consumption of the wifi device.

103: Trigger turning-on of the wifi device when it is determined that the terminal is located outside the coverage of each of the wifi access points corresponding to each of all the wifi access point identifiers at the first moment, and is located within coverage of at least one wifi access point among the wifi access points at the second moment.

In the embodiment of the present invention, the determining whether the terminal is located within the coverage of each of the wifi access points corresponding to each of all the wifi access point identifiers at the first moment and whether the terminal is located within the coverage of each of the wifi access points corresponding to each of all the wifi access point identifiers at the second moment may be determining whether a location of the terminal at the first moment and a location of the terminal at the second moment are within or outside the coverage of each of the wifi access points corresponding to each of all the wifi access point identifiers.

For example, it is assumed that the terminal stores 5 wifi access point identifiers, which are wifi1, wifi2, wifi3, wifi4, and wifi5, and coverage of a wifi access point corresponding to each of the wifi access point identifiers has been determined. It is assumed that coverage of a wifi access point corresponding to wifi1 and coverage of a wifi access point corresponding to wifi2 partially overlap, and coverage of a wifi access point corresponding to each of wifi3, wifi4, and wifi5 does not overlap with coverage of the other 4 wifi access points, and when the terminal begins to move in the coverage of the wifi access point corresponding to wifi1, first location information at a first moment and second location information at a second moment are acquired. It is assumed that a location corresponding to the first location information is outside the coverage of the wifi access points corresponding to wifi1, wifi2, wifi3, wifi4, and wifi5, and a location corresponding to the second location information is within the coverage of the wifi access point corresponding to wifi1, and the turning-on of the wifi device can be triggered.

In the embodiment of the present invention, first location information of the terminal at a first moment, second location information of the terminal at a second moment, and coverage of each of wifi access points corresponding to each of all wifi access point identifiers stored in the terminal are acquired, where the first moment is earlier than the second moment; turning-off of the wifi device is triggered when it is determined that the terminal is located within coverage of at least one wifi access point among the wifi access points at the first moment, and is located outside the coverage of each of the wifi access points corresponding to each of all the wifi access point identifiers at the second moment; and turning-on of the wifi device is triggered when it is determined that the terminal is located outside the coverage of each of the wifi access points corresponding to each of all the wifi access point identifiers at the first moment, and is located within coverage of at least one wifi access point among the wifi access points at the second moment. Compared with the prior art in which a wifi device in a standby state wastes power, and after the wifi device is turned off, the wifi device cannot be automatically turned on, with the control method for a wifi device in a terminal provided in the embodiment of the present invention, turning-off or turning-on of the wifi device in the terminal can be triggered according to a location of the terminal in a moving process, so that power of the terminal is saved, and furthermore, the wifi device does not need to be turned on manually by a user.

Optionally, based on the embodiment corresponding to FIG. 1, in another embodiment of the control method for a wifi device in a terminal provided in the embodiments of the present invention, the step of triggering turning-off of the wifi device when it is determined that the terminal is located within coverage of at least one wifi access point among the wifi access points at the first moment, and is located outside the coverage of each of the wifi access points corresponding to each of all the wifi access point identifiers at the second moment may specifically include:
determining a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
triggering the turning-off of the wifi device when the location corresponding to the first location information is within the coverage of the at least one wifi access point among the wifi access points, and the location corresponding to the second location information is outside the coverage of each of the wifi access points corresponding to each of all the wifi access point identifiers.

In the embodiment of the present invention, whether the location corresponding to the first location information of the terminal and the location corresponding to the second location information are within or outside the coverage of the wifi access points corresponding to the wifi access point identifiers stored in the terminal may be determined in a GPS positioning manner.

For example, if coverage of a wifi access point corresponding to a wifi access point identifier stored in the terminal is the Shenzhen International Trading Building, and it is acquired that in a moving process of the terminal, a location corresponding to first location information at a first moment is in the hall of the International Trading Building, and a location corresponding to second location information at a second moment is outside the entrance of the International Trading Building, it can be determined that the terminal has moved outside the coverage of the wifi access point, and turning-off of the wifi device can be triggered.

Optionally, based on the embodiment corresponding to FIG. 1, in another embodiment of the control method for a wifi device in a terminal provided in the embodiments of the present invention, the step of triggering turning-on of the wifi device when it is determined that the terminal is located outside the coverage of each of the wifi access points corresponding to each of all the wifi access point identifiers at the first moment, and is located within coverage of at least one wifi access point among the wifi access points at the second moment may specifically include:
determining a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
triggering the turning-on of the wifi device when the location corresponding to the first location information is outside the coverage of each of the wifi access points corresponding to each of all the wifi access point identifiers, and the location corresponding to the second location information is within the coverage of the at least one wifi access point among the wifi access points.

In the embodiment of the present invention, if it is determined, through positioning of a GPS, that the location corresponding to the first location information of the terminal at the first moment is outside the entrance of the Shenzhen International Trading Building, and the location corresponding to the second location information at the second moment is the hall of the Shenzhen International Trading Building, it can be determined that the terminal enters the coverage of the wifi access point, and turning-on of the wifi device of the terminal can be triggered.

Optionally, based on the embodiment corresponding to FIG. 1 and an optional embodiment corresponding to FIG. 1, in another embodiment of the control method for a wifi device in a terminal provided in the embodiments of the present invention, the control method may further include:
acquiring a trigger instruction for connecting to a new wifi access point, where the trigger instruction carries an identifier of the new wifi access point; and
acquiring and associatively storing the identifier of the new wifi access point and coverage of the new wifi access point.

In the embodiment of the present invention, after the terminal receives a trigger instruction triggered by a user for connecting to a new wifi access point, the terminal can acquire an identifier of the new wifi access point and coverage of the new wifi access point, and associatively store the identifier of the new wifi access point and the coverage of the new wifi access point.

Optionally, based on the embodiment corresponding to FIG. 1 and an optional embodiment corresponding to FIG. 1, in another embodiment of the control method for a wifi device in a terminal provided in the embodiments of the present invention, after the step of turning on the wifi device, the control method may further include:
sending a first search instruction to the wifi device, so that the wifi device searches for each of the wifi access points corresponding to each of all the wifi access point identifiers stored in the terminal, and the wifi device establishes a connection to one of found wifi access points.

In the embodiment of the present invention, after the terminal enters coverage of a wifi access point, the wifi device is turned on, and after the wifi device is turned on, the wifi device can search for wifi access points corresponding to wifi access point identifiers stored in the terminal, where coverage of the wifi access points may overlap. When the wifi device finds only one wifi access point, the wifi device may establish a wifi connection to the found wifi access point. If the wifi device finds several wifi access points, the wifi device may establish a wifi connection to one selected found wifi access point.

Optionally, based on the embodiment corresponding to FIG. 1 and an optional embodiment corresponding to FIG. 1, in another embodiment of the control method for a wifi device in a terminal provided in the embodiments of the present invention, after the step of turning on the wifi device, the control method may further include:
sending a second search instruction to the wifi device, so that the wifi device searches for each of the wifi access points corresponding to each of all the wifi access point identifiers stored in the terminal;
receiving identifiers of found wifi access points sent by the wifi device;
determining an identifier of a wifi access point to which a connection is established for the most times among the identifiers of the found wifi access points; and
sending, to the wifi device, the identifier of the wifi access point to which the connection is established for the most times, so that the wifi device establishes a connection to the wifi access point corresponding to the identifier of the wifi access point to which the connection is established for the most times.

In the embodiment of the present invention, after the terminal enters coverage of a wifi access point, the wifi device is turned on, and after the wifi device is turned on, a control apparatus may send a search instruction to the wifi device, so that the wifi device can search for wifi access points corresponding to wifi access point identifiers stored in the terminal, where coverage of the wifi access points may overlap. When the wifi device finds only one or multiple wifi access points, the wifi device may return identifiers of the found wifi access points to the control apparatus, so that the control apparatus can determine an identifier of a wifi access point to which a connection is established for the most times, and instruct the wifi device to establish a connection to the wifi access point to which the connection is established for the most times.

For ease of understanding, a process of the control method for a wifi device in a terminal provided in the embodiments of the present invention is described in detail in the following by using an application scenario as an example.

Referring to FIG. 2, coverage of a wifi access point 10 is determined, and a location where the wifi access point 10 is located may be used as the origin of coordinates, and the coverage of the wifi access point 10 is a circular area with a radius of 100 meters and centered on the origin of coordinates. A terminal 20 acquires, in a GPS or another manner, that first location information of the moving terminal 20 at a first moment is 90 meters to the left of the origin, and second location information of the moving terminal 20 at a second moment is 101 meters to the left of the origin, so that it can be determined that the terminal 20 moves outside the coverage of the wifi access point 10, and the terminal 20 can trigger turning-off of a wifi device in the terminal 20. If the terminal 20 acquires, in a GPS or another manner, that the first location information of the moving terminal 20 at the first moment is 101 meters to the left of the origin, and the second location information of the moving terminal 20 at the second moment is 90 meters to the left of the origin, it can be determined that the terminal 20 moves into the coverage of the wifi access point 10, and the terminal 20 can trigger turning-on of the wifi device in the terminal 20.

In this way, through the description of the foregoing application scenario, it can be clearly seen that, with the control method provided in the embodiments of the present invention, turning-off or turning-on of a wifi device in a terminal can be triggered according to location information of the terminal, so that power of the terminal is saved, and furthermore, the wifi device does not need to be turned on manually by a user.

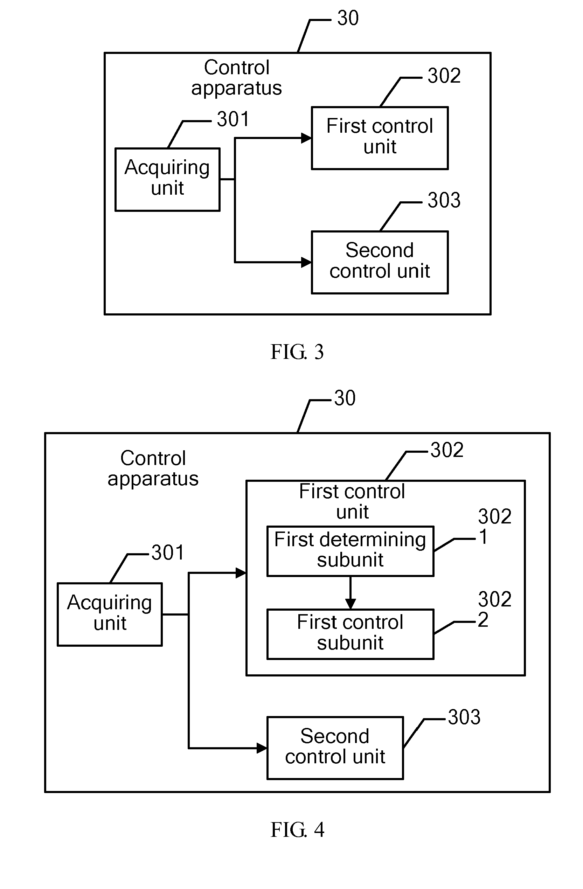

Referring to FIG. 3, an embodiment of a control apparatus provided in the embodiments of the present invention includes:
an acquiring unit 301, configured to acquire first location information of the terminal at a first moment, second location information of the terminal at a second moment, and coverage of each of wifi access points corresponding to each of all wifi access point identifiers stored in the terminal, where the first moment is earlier than the second moment;
a first control unit 302, configured to trigger turning-off of the wifi device when it is determined that the terminal is located within coverage, which is acquired by the acquiring unit 301, of at least one wifi access point among the wifi access points at the first moment, and is located outside the coverage of each of the wifi access points corresponding to each of all the wifi access point identifiers at the second moment; and
a second control unit 303, configured to trigger turning-on of the wifi device when it is determined that the terminal is located outside the coverage, which is acquired by the acquiring unit 301, of each of the wifi access points corresponding to each of all the wifi access point identifiers at the first moment, and is located within coverage of at least one wifi access point among the wifi access points at the second moment.

In the embodiment of the present invention, the acquiring unit 301 acquires first location information of the terminal at a first moment, second location information of the terminal at a second moment, and coverage of each of wifi access points corresponding to each of all wifi access point identifiers stored in the terminal, where the first moment is earlier than the second moment; the first control unit 302 triggers turning-off of the wifi device when it is determined that the terminal is located within coverage, which is acquired by the acquiring unit 301, of at least one wifi access point among the wifi access points at the first moment, and is located outside the coverage of each of the wifi access points corresponding to each of all the wifi access point identifiers at the second moment; and the second control unit 303 triggers turning-on of the wifi device when it is determined that the terminal is located outside the coverage, which is acquired by the acquiring unit 301, of each of the wifi access points corresponding to each of all the wifi access point identifiers at the first moment, and is located within coverage of at least one wifi access point among the wifi access points at the second moment. Compared with the prior art, the control apparatus provided in the embodiments of the present invention can trigger turning-off or turning-on of a wifi device in a terminal according to location information of the terminal, so that power of the terminal is saved, and furthermore, the wifi device does not need to be turned on manually by a user.

Based on the embodiment corresponding to FIG. 3, referring to FIG. 4, in another embodiment of a terminal provided in the embodiments of the present invention, the first control unit 302 includes a first determining subunit 3021 and a first control subunit 3022, where
the first determining subunit 3021 is configured to determine a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
the first control subunit 3022 is configured to trigger the turning-off of the wifi device when the first determining subunit 3021 determines that the location corresponding to the first location information is within the coverage of the at least one wifi access point among the wifi access points, and the location corresponding to the second location information is outside the coverage of each of the wifi access points corresponding to each of all the wifi access point identifiers.

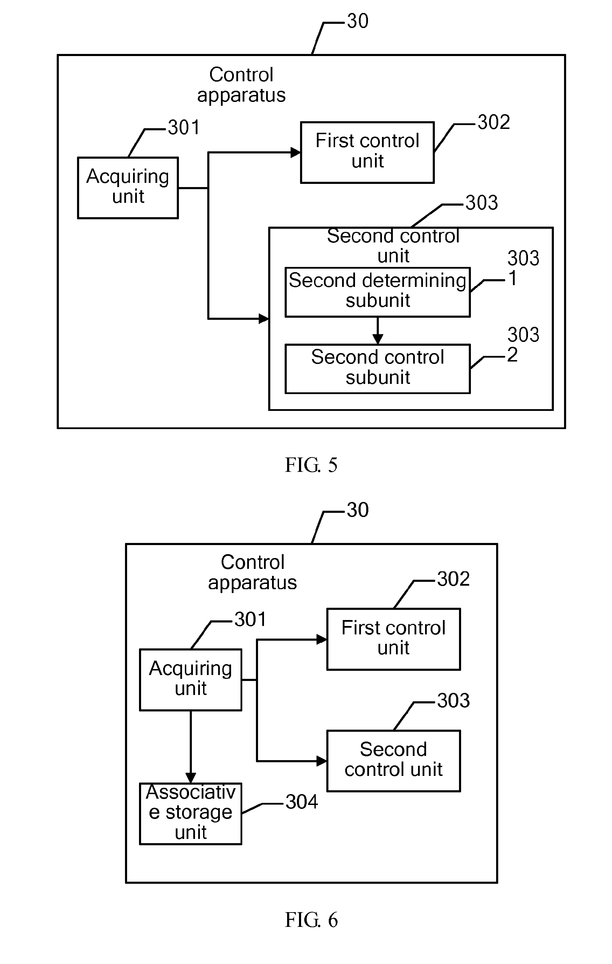

Based on the embodiment corresponding to FIG. 3, referring to FIG. 5, in another embodiment of the terminal provided in the embodiments of the present invention, the second control unit 303 includes a second determining subunit 3031 and a second control subunit 3032, where
the second determining subunit 3031 is configured to determine a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
the second control subunit 3032 is configured to trigger the turning-on of the wifi device when the second determining subunit 3031 determines that the location corresponding to the first location information is outside the coverage of each of the wifi access points corresponding to each of all the wifi access point identifiers, and the location corresponding to the second location information is within the coverage of the at least one wifi access point among the wifi access points.

Based on the embodiment corresponding to FIG. 3, referring to FIG. 6, another embodiment of the terminal provided in the embodiments of the present invention further includes an associative storage unit 304, where
the acquiring unit 301 is further configured to acquire a trigger instruction for connecting to a new wifi access point, where the trigger instruction carries an identifier of the new wifi access point, and acquire the identifier of the new wifi access point and coverage of the new wifi access point; and
the associative storage unit 304 is configured to associatively store the identifier of the new wifi access point and the coverage of the new wifi access point that are acquired by the acquiring unit 301.

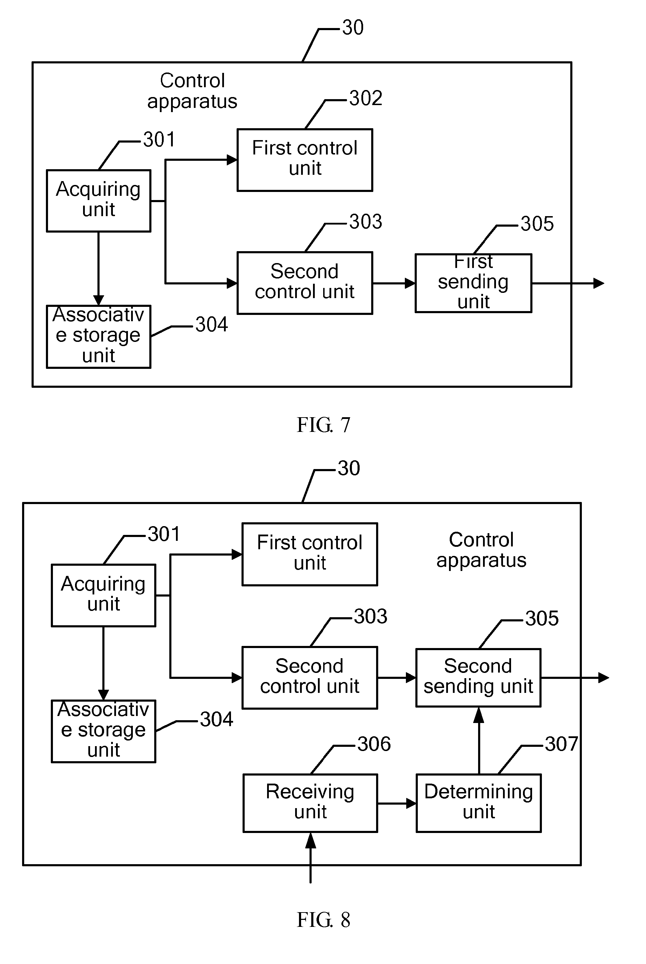

Based on the embodiment corresponding to FIG. 6, referring to FIG. 7, another embodiment of the terminal provided in the embodiments of the present invention further includes a first sending unit 305, where
the first sending unit 305 is configured to send a first search instruction to the wifi device after the second control unit 303 triggers the turning-on of the wifi device, so that the wifi device searches for each of the wifi access points corresponding to each of all the wifi access point identifiers stored in the terminal, and the wifi device establishes a connection to one of found wifi access points.

Based on the embodiment corresponding to FIG. 6, referring to FIG. 8, another embodiment of the terminal provided in the embodiments of the present invention further includes a second sending unit 305, a receiving unit 306, and a determining unit 307, where
the second sending unit 305 is configured to send a second search instruction to the wifi device after the second control unit 303 triggers the turning-on of the wifi device, so that the wifi device searches for each of the wifi access points corresponding to each of all the wifi access point identifiers stored in the terminal;
the receiving unit 306 is configured to receive identifiers of found wifi access points sent by the wifi device;
the determining unit 307 is configured to determine an identifier of a wifi access point to which a connection is established for the most times among the identifiers of the found wifi access points received by the receiving unit 306; and
the second sending unit 305 is further configured to send, to the wifi device, the identifier, which is determined by the determining unit 307, of the wifi access point to which the connection is established for the most times, so that the wifi device establishes a connection to the wifi access point corresponding to the identifier of the wifi access point to which the connection is established for the most times.

An embodiment of the present invention further provides a computer readable storage medium, where the computer readable storage medium stores an executable program, and when the program is run, the following steps are performed:
acquiring first location information of the terminal at a first moment, second location information of the terminal at a second moment, and coverage of each of wifi access points corresponding to each of all wifi access point identifiers stored in the terminal, where the first moment is earlier than the second moment;
triggering turning-off of the wifi device when it is determined that the terminal is located within coverage of at least one wifi access point among the wifi access points at the first moment, and is located outside the coverage of each of the wifi access points corresponding to each of all the wifi access point identifiers at the second moment; and
triggering turning-on of the wifi device when it is determined that the terminal is located outside the coverage of each of the wifi access points corresponding to each of all the wifi access point identifiers at the first moment, and is located within coverage of at least one wifi access point among the wifi access points at the second moment.

When the program is run, the following steps may further be performed:
acquiring a trigger instruction for connecting to a new wifi access point, where the trigger instruction carries an identifier of the new wifi access point; and
acquiring and associatively storing the identifier of the new wifi access point and coverage of the new wifi access point.

When the program is run, the following step may further be performed:
sending a first search instruction to the wifi device, so that the wifi device searches for each of the wifi access points corresponding to each of all the wifi access point identifiers stored in the terminal, and the wifi device establishes a connection to one of found wifi access points.

When the program is run, the following steps may further be performed:
sending a second search instruction to the wifi device, so that the wifi device searches for each of the wifi access points corresponding to each of all the wifi access point identifiers stored in the terminal;
receiving identifiers of found wifi access points sent by the wifi device;
determining an identifier of a wifi access point to which a connection is established for the most times among the identifiers of the found wifi access points; and
sending, to the wifi device, the identifier of the wifi access point to which the connection is established for the most times, so that the wifi device establishes a connection to the wifi access point corresponding to the identifier of the wifi access point to which the connection is established for the most times.

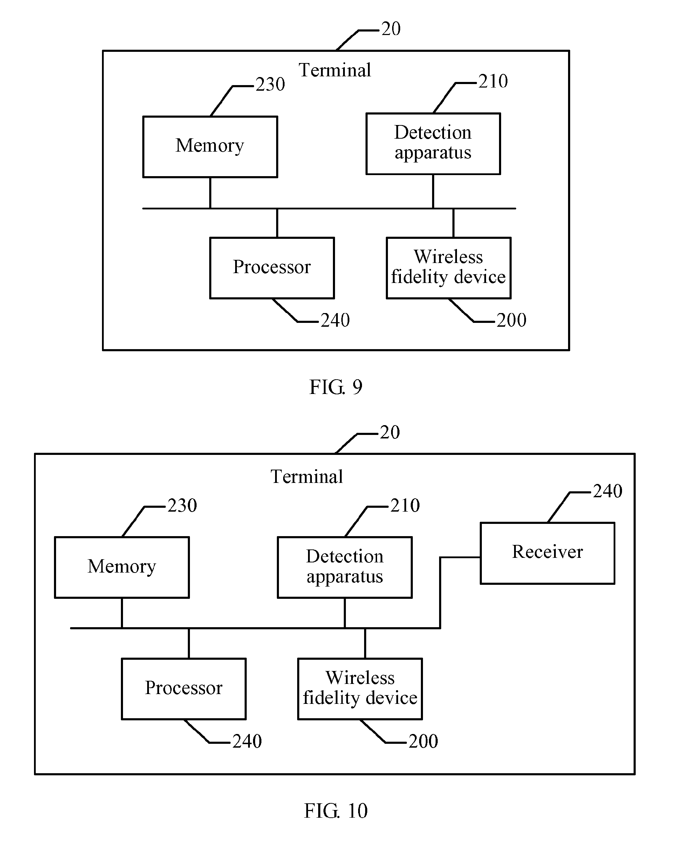

Referring to FIG. 9, an embodiment of a terminal provided in the embodiments of the present invention includes: a wifi device 200, a detection apparatus 210, a memory 220, and a processor 230, where
the detection apparatus 210 is configured to detect, in a moving process of the terminal, first location information at a first moment and second location information at a second moment;
the memory 220 is configured to store coverage of each of wifi access points corresponding to each of all wifi access point identifiers, where all wifi access points have established a connection to the terminal before; and
the processor 230 is configured to trigger turning-off of the wifi device 200 when it is determined that the terminal is located within coverage of at least one wifi access point among the wifi access points at the first moment, and is located outside the coverage of each of the wifi access points corresponding to each of all the wifi access point identifiers at the second moment; and trigger turning-on of the wifi device 200 when it is determined that the terminal is located outside the coverage of each of the wifi access points corresponding to each of all the wifi access point identifiers at the first moment, and is located within coverage of at least one wifi access point among the wifi access points at the second moment.

Based on the embodiment corresponding to FIG. 9, in another embodiment of the terminal provided in the embodiments of the present invention,
the processor 230 is specifically configured to determine a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and trigger the turning-off of the wifi device 200 when the location corresponding to the first location information is within the coverage of the at least one wifi access point among the wifi access points, and the location corresponding to the second location information is outside the coverage of each of the wifi access points corresponding to each of all the wifi access point identifiers.

Based on the embodiment corresponding to FIG. 9, in another embodiment of the terminal provided in the embodiments of the present invention,
the processor 230 is specifically configured to determine a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and trigger the turning-on of the wifi device 200 when it is determined that the location corresponding to the first location information is outside the coverage of each of the wifi access points corresponding to each of all the wifi access point identifiers, and the location corresponding to the second location information is within the coverage of the at least one wifi access point among the wifi access points.

Based on the embodiment corresponding to FIG. 9, referring to FIG. 10, another embodiment of the terminal provided in the embodiments of the present invention further includes a receiver 240, where
the receiver 240 is configured to receive a trigger instruction for connecting to a new wifi access point, where the trigger instruction carries an identifier of the new wifi access point;
the detection apparatus 210 is further configured to detect coverage of the new wifi access point corresponding to the identifier of the new wifi access point; and
the memory 220 is further configured to associatively store the identifier of the new wifi access point and the coverage of the new wifi access point.

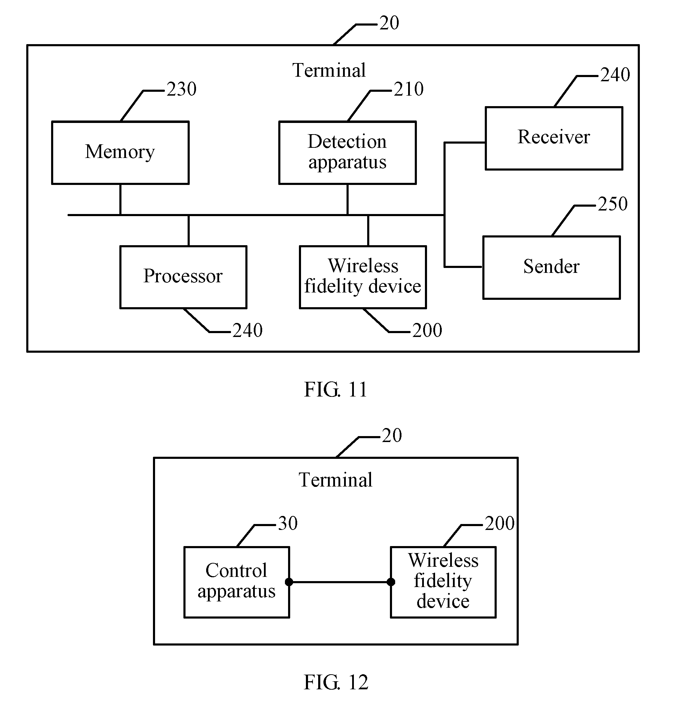

Based on the embodiment corresponding to FIG. 10, referring to FIG. 11, another embodiment of the terminal provided in the embodiments of the present invention further includes a sender 250, where
the sender 250 is configured to send a first search instruction to the wifi device 200, so that the wifi device searches for each of the wifi access points corresponding to each of all the wifi access point identifiers stored in the terminal, and the wifi device establishes a connection to one of found wifi access points.

Referring to FIG. 11, in another embodiment of the terminal provided in the embodiments of the present invention,
the sender 250 is further configured to send a second search instruction to the wifi device 200, so that the wifi device searches for each of the wifi access points corresponding to each of all the wifi access point identifiers stored in the terminal;
the receiver 240 is further configured to receive identifiers of found wifi access points sent by the wifi device 200;
the processor 230 is further configured to determine an identifier of a wifi access point to which a connection is established for the most times among the identifiers of the found wifi access points; and
the sender 250 is further configured to send, to the wifi device 200, the identifier of the wifi access point to which the connection is established for the most times, so that the wifi device establishes a connection to the wifi access point corresponding to the identifier of the wifi access point to which the connection is established for the most times.

Referring to FIG. 12, another embodiment of the terminal 20 provided in the embodiments of the present invention includes: a control apparatus 30 and a wifi device 200, where the control apparatus 30 controls the wifi device 200; and
the control apparatus 30 is configured to acquire first location information of the terminal at a first moment, second location information of the terminal at a second moment, and coverage of each of wifi access points corresponding to each of all wifi access point identifiers stored in the terminal, where the first moment is earlier than the second moment; trigger turning-off of the wifi device when it is determined that the terminal is located within coverage of at least one wifi access point among the wifi access points at the first moment, and is located outside the coverage of each of the wifi access points corresponding to each of all the wifi access point identifiers at the second moment; and trigger turning-on of the wifi device when it is determined that the terminal is located outside the coverage of each of the wifi access points corresponding to each of all the wifi access point identifiers at the first moment, and is located within coverage of at least one wifi access point among the wifi access points at the second moment.

The terminal provided in the embodiments of the present invention can trigger turning-off or turning-on of a wifi device in a terminal according to location information of the terminal, so that power of the terminal is saved, and furthermore, the wifi device does not need to be turned on manually by a user.

A person of ordinary skill in the art may understand that all or part of the steps of the methods in the foregoing embodiments may be implemented by a program instructing relevant hardware. The program may be stored in a computer readable storage medium. The storage medium may include a ROM, a RAM, a magnetic disk, or an optical disc, or the like.

The control method and apparatus for a wifi device in a terminal, and the terminal provided in the embodiments of the present invention are described in the foregoing in detail. Although the principles and implementation manners of the present invention are described through specific examples in this specification, the descriptions of the foregoing embodiments are only intended to help understand the method and core ideas of the present invention. Meanwhile, a person of ordinary skill in the art may make modifications to the specific implementation manners and application scopes according to the ideas of the present invention. In conclusion, the content of the specification shall not be construed as a limitation to the present invention.

## Claims

1. A control method for a wireless fidelity wifi device in a terminal, comprising:
acquiring first location information of the terminal at a first moment, second location information of the terminal at a second moment, and coverage of each of wifi access points corresponding to each of all wifi access point identifiers stored in the terminal, wherein the first moment is earlier than the second moment;
triggering turning-off of the wifi device when it is determined that the terminal is located within coverage of at least one wifi access point among the wifi access points at the first moment, and is located outside the coverage of each of the wifi access points corresponding to each of all the wifi access point identifiers at the second moment; and
triggering turning-on of the wifi device when it is determined that the terminal is located outside the coverage of each of the wifi access points corresponding to each of all the wifi access point identifiers at the first moment, and is located within coverage of at least one wifi access point among the wifi access points at the second moment.

2. The control method according to claim 1, wherein the step of triggering turning-off of the wifi device when it is determined that the terminal is located within coverage of at least one wifi access point among the wifi access points at the first moment, and is located outside the coverage of each of the wifi access points corresponding to each of all the wifi access point identifiers at the second moment specifically comprises:
determining a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
triggering the turning-off of the wifi device when the location corresponding to the first location information is within the coverage of the at least one wifi access point among the wifi access points, and the location corresponding to the second location information is outside the coverage of each of the wifi access points corresponding to each of all the wifi access point identifiers.

3. The control method according to claim 1, wherein the step of triggering turning-on of the wifi device when it is determined that the terminal is located outside the coverage of each of the wifi access points corresponding to each of all the wifi access point identifiers at the first moment, and is located within coverage of at least one wifi access point among the wifi access points at the second moment specifically comprises:
determining a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
triggering the turning-on of the wifi device when the location corresponding to the first location information is outside the coverage of each of the wifi access points corresponding to each of all the wifi access point identifiers, and the location corresponding to the second location information is within the coverage of the at least one wifi access point among the wifi access points.

4. The control method according to any one of claims 1 to 3, further comprising:
acquiring a trigger instruction for connecting to a new wifi access point, wherein the trigger instruction carries an identifier of the new wifi access point; and
acquiring and associatively storing the identifier of the new wifi access point and coverage of the new wifi access point.

5. The control method according to any one of claims 1 to 4, after the step of turning on the wifi device, further comprising:
sending a first search instruction to the wifi device, so that the wifi device searches for each of the wifi access points corresponding to each of all the wifi access point identifiers stored in the terminal, and the wifi device establishes a connection to one of found wifi access points.

6. The control method according to any one of claims 1 to 4, after the step of turning on the wifi device, further comprising:
sending a second search instruction to the wifi device, so that the wifi device searches for each of the wifi access points corresponding to each of all the wifi access point identifiers stored in the terminal;
receiving identifiers of found wifi access points sent by the wifi device;
determining an identifier of a wifi access point to which a connection is established for the most times among the identifiers of the found wifi access points; and
sending, to the wifi device, the identifier of the wifi access point to which the connection is established for the most times, so that the wifi device establishes a connection to the wifi access point corresponding to the identifier of the wifi access point to which the connection is established for the most times.

7. A control apparatus, comprising:
an acquiring unit, configured to acquire first location information of the terminal at a first moment, second location information of the terminal at a second moment, and coverage of each of wifi access points corresponding to each of all wifi access point identifiers stored in the terminal, wherein the first moment is earlier than the second moment;
a first control unit, configured to trigger turning-off of the wifi device when it is determined that the terminal is located within coverage, which is acquired by the acquiring unit, of at least one wifi access point among the wifi access points at the first moment, and is located outside the coverage of each of the wifi access points corresponding to each of all the wifi access point identifiers at the second moment; and
a second control unit, configured to trigger turning-on of the wifi device when it is determined that the terminal is located outside the coverage, which is acquired by the acquiring unit, of each of the wifi access points corresponding to each of all the wifi access point identifiers at the first moment, and is located within coverage of at least one wifi access point among the wifi access points at the second moment.

8. The control apparatus according to claim 7, wherein the first control unit comprises: a first determining subunit and a first control subunit, wherein
the first determining subunit is configured to determine a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
the first control subunit is configured to trigger turning-off of the wifi device when the first determining subunit determines that the location corresponding to the first location information is within the coverage of the at least one wifi access point among the wifi access points, and the location corresponding to the second location information is outside the coverage of each of the wifi access points corresponding to each of all the wifi access point identifiers.

9. The control apparatus according to claim 7, wherein the second control unit comprises: a second determining subunit and a second control subunit, wherein
the second determining subunit is configured to determine a relationship between a location corresponding to the first location information and the coverage of each of the wifi access points corresponding to each of all the wifi access point identifiers, and a relationship between a location corresponding to the second location information and the coverage of each of the wifi access points corresponding to each of all the wifi access point identifiers; and
the second control subunit is configured to trigger the turning-on of the wifi device when the second determining subunit determines that the location corresponding to the first location information is outside the coverage of each of the wifi access points corresponding to each of all the wifi access point identifiers, and the location corresponding to the second location information is within the coverage of the at least one wifi access point among the wifi access points.

10. The control apparatus according to any one of claims 7 to 9, further comprising an associative storage unit, wherein
the acquiring unit is further configured to acquire a trigger instruction for connecting to a new wifi access point, wherein the trigger instruction carries an identifier of the new wifi access point, and acquire the identifier of the new wifi access point and coverage of the new wifi access point; and
the associative storage unit is configured to associatively store the identifier of the new wifi access point and the coverage of the new wifi access point that are acquired by the acquiring unit.

11. The control apparatus according to any one of claims 7 to 10, further comprising a first sending unit, wherein
the first sending unit is configured to send a first search instruction to the wifi device after the second control unit triggers the turning-on of the wifi device, so that the wifi device searches for each of the wifi access points corresponding to each of all the wifi access point identifiers stored in the terminal, and the wifi device establishes a connection to one of found wifi access points.

12. The control apparatus according to any one of claims 7 to 10, further comprising a second sending unit, a receiving unit, and a determining unit, wherein
the second sending unit is configured to send a second search instruction to the wifi device, so that the wifi device searches for each of the wifi access points corresponding to each of all the wifi access point identifiers stored in the terminal;
the receiving unit is configured to receive identifiers of found wifi access points sent by the wifi device;
the determining unit is configured to determine an identifier of a wifi access point to which a connection is established for the most times among the identifiers of the found wifi access points received by the receiving unit; and
the second sending unit is configured to send, to the wifi device, the identifier, which is determined by the determining unit, of the wifi access point to which the connection is established for the most times, so that the wifi device establishes a connection to the wifi access point corresponding to the identifier of the wifi access point to which the connection is established for the most times.

13. A terminal, comprising: a control apparatus and a wifi device, wherein the control apparatus controls the wifi device; and
the control apparatus is the control apparatus according to any one of claims 7 to 12.
